# EUROPEAN PATENT APPLICATION

(11) **EP 1 755 237 A1**
(43) Date of publication of application: **21.02.2007**
(21) Application number: 05745940.6
(22) Date of filing: 01.06.2005
(51) Int. Cl.: H04B 7/26

(54) **RADIO COMMUNICATION DEVICE AND RADIO COMMUNICATION METHOD**

(30) Priority: 08.06.2004 JP 2004170184
(71) Applicant: MATSUSHITA ELECTRIC INDUSTRIAL CO., LTD., Osaka 571-8501 (JP)
(72) Inventor: IMAIZUMI, Satoshi Matsushita Electric Industrial, Chuo-ku, Osaka-shi, Osaka 540-6319 (JP); SUZUKI, Hidetoshi Matsushita Electric Industrial, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/010042
(87) International publication number: WO 2005/122432

(57) **Abstract**

A wireless communication apparatus for performing a different carrier measurement without lowering throughput is disclosed. In this apparatus, a packet continuation determining section (121) observes user packet data and determines whether packets addressed to the wireless communication apparatus are continuously received or paused; a different carrier measurement suppressing section (122) generates a signal to allow the different carrier measurement when the determination result in the packet continuation determining section (121) indicates that packets are paused and does not generate the signal to allow the different carrier measurement when the determination result in the packet continuation determining section (121) indicates that packets are continuing. When the different carrier measurement is allowed, the different carrier reception timing setting section (112) notifies the timing of switching the carrier to a carrier switch controlling section (113) and a carrier reception quality measuring section (110), and at this timing, the carrier switch controlling section (113) controls the carrier switch of the RF receiving section (102) and the carrier reception quality measuring section (110) measures the reception quality of the switched carrier.

## Description

### Technical Field

The present invention relates to a wireless communication apparatus and a wireless communication method for switching a carrier frequency currently used for communication to a different carrier frequency.

### Background Art

Recently, in mobile communication, system capacity is strained by the increase in the number of users. To solve this problem, a method of carrying out communication by switching between a plurality of carrier frequencies in a CDMA (Code Division Multiple Access) system that normally operates at a single carrier frequencyhasbeenproposed. Inthismethod, the wireless communication terminal apparatus (hereinafter referred to as "communication terminal") must measure and monitor the reception quality and the like of the plurality of carriers so that communication is not interrupted when switching over the carrier frequency. "Compressed mode" disclosed in non-patent document 1 of a W-CDMA (Wideband Code Division Multiple Access) standard, for example, is known as a technique for measuring and monitoring the reception quality of a plurality of carriers.

Compressed mode is a mode in which a base station carries out communication by providing an interval for locally transmitting data at double speed and an interval for pausing transmission at a certain fixed period during the communication between the base station and the communication terminal. The communication terminal in compressed mode receives data at double speed in the interval in which data is present, and switches the carrier frequency and measures the reception quality of the carrier different from the carrier currently being used in communication (hereinafter referred to as "different carrier") in the interval in which data is not present (interval in which the base station pauses transmission).

When the measurement of the reception quality of the different carrier (hereinafter referred to as "different carrier measurement") is completed, the communication terminal notifies the base station of the reception quality of the measured plurality of carriers. The base station takes the carrier reception quality and the degree of congestion of the communication terminal and switches to a carrier for carrying out data communication after making an adjustment with the communication terminal. Through such series of operations, a switch to a different carrier can be performed while continuing the communication even in the continuous communication such as voice communication.

In order to efficiently carry out the data communication, HSDPA (High Speed Downlink Packet Access) disclosed in chapter 4.6 and chapter 4.7 of non-patent document 1 and chapter 6.A of non-patent document 2 or a written standard of W-CDMA, for example, is used as a system for carrying out high efficiency packet communication in the mobile communication.

HSPDA is a method of using the channel common among a plurality of communication terminals (hereinafter referred to as "shared channel") in time division. HSPDA will now be briefly explained. The communication terminal measures the reception quality of the packet and reports the measured reception quality to the base station. The base station assigns the channel to the communication terminal having good reception quality to efficiently use the shared channel. The communication terminal, when the shared channel is assigned to the communication terminal itself, receives the shared channel and does not perform the receiving operation when the shared channel is not assigned.

Generally, packet communication such as in HSDPA and the like has good efficiency in communication in which user data is generated in a burst manner, as in internet access, for example. Continuous communication such as voice communication is more efficient when using a dedicated channel for continuous communication such as DPCH (Dedicated Physical Channel) than the packet communication such as HSDPA.

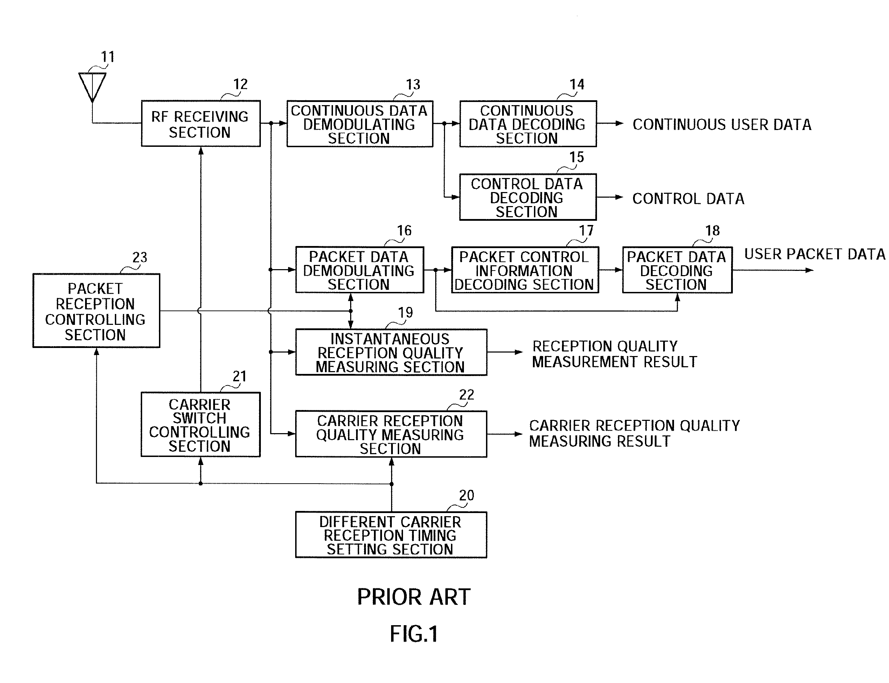

The operation of when performing a different carrier measurement when the above described communication terminal is carrying out the packet communication will now be explained with reference to the figures. FIG.1 is a block diagram showing a configuration of the wireless communication terminal apparatus.

As shown in FIG. 1, the signal transmitted from the base station is received at RF receiving section 12 via antenna 11, and a predetermined wireless receiving process such as a down converter and the like is performed. The RF receiving section 12 outputs the continuous data and the packet data of the received signal each to a different demodulating section. That is, the continuous data is output to the continuous data demodulating section 13, and the packet data is output to the packet data demodulating section 16. The continuous data demodulating section 13 demodulates the continuous data and the packet data demodulating section 16 demodulates the packet data, respectively.

The continuous data signal demodulated by the continuous data demodulating section 13 is decoded as user data by a continuous data decoding section 14 and then output. The continuous data signal generally includes control data, which is decoded by a control data decoding section 15 and then output.

The packet data signal demodulated by the packet data demodulating section 16 is determined whether or not it is a signal addressed to the subject wireless communication terminal by a control information decoding section 17, and, when the packet data is addressed to the subject wireless communication terminal, the packet data signal is decoded in a packet data decoding section 18 and the packet data is obtained.

An instantaneous reception quality measuring section 19 measures the reception quality of the packet data signal and reports the measured reception quality to the base station. The reception quality of the packet data signal becomes the information for assigning the shared channel of HSDPA in the base station.

A different carrier reception timing setting section 20 notifies a carrier switch controlling section 21, a carrier reception quality measuring section 22, and a packet reception controlling section 23 regarding the implementation of the different carrier measurement at the timing of compressed mode.

The carrier switching section 21 controls the switch of the carrier frequency to receive in the RF receiving section 12 at the timing of compressed mode. The carrier reception quality measuring section 22 normally measures the reception quality of the carrier frequency used by the communication terminal for communication, but performs different carrier measurement at a timing notified by the different carrier reception timing setting section 20 and outputs the result thereof.

The packet reception controlling section 23 controls the packet data demodulating section 16 and the instantaneous reception quality measuring section 19 so as not to receive the packet when performing the different carrier measurement. That is, since the packet signal addressed to its station cannot be transmitted or cannot be received even if transmitted in the different carrier, the reception of all packet data is suspended during the different carrier measurement in the packet data demodulating section 16. Therefore, the instantaneous reception quality measuring section 19 for measuring the reception quality of the packet data signal received at the carrier frequency currently being used for communication also suspends the measurement for an interval in which the normal measurement may not be performed during the different carrier measurement. Compressed mode is a mode applied to a continuous data communication such as voice communication and the like, and is not applied to the packet communication.

Therefore, when the timings of the different carrier measurement and the packet communication are overlapping in the communication terminal, the different carrier measurement is prioritized over the packet communication and the packet communication is meanwhile being paused.

In FIG. 1, a configuration of simultaneously receiving the continuous user data such as voice communication and the packet data is illustrated to show a more general configuration, but even if such voice communication is not present, for example, the communication terminal must receive the continuous data channel to generally exchange control information and the like.
Non-patent Document 1: 3GPP TS 25.212 V5.5.0 (3rd Generation Partnership Project; Technical Specification Group Radio Access Network; Multiplexing and channel coding (FDD)(Release 5)).
Non-patent Document 2: 3GPP TS 25.214 V5.5.0 (3rd Generation Partnership Project; Technical Specification Group Radio Access Network; Physical layer procedures (Release 5)).

### Disclosure of Invention

### Problems to be Solved by the Invention

However, when packet communication is being paused when performing the different carrier measurement, the reception opportunity of the packet is lost and the throughput is lowered. In particular, when a plurality of communication terminals use the shared channel at time division such as in HSPDA, the packet is not transmitted until the shared channel is assigned if the reception opportunity is lost, and thus the influence of the lowering of throughput becomes large. Further, when the communication terminal and the like corresponding to the plurality of systems measure the reception quality of a multiple of different carriers, the probability in which the communication opportunity of the packet may be lost also increases therewith, and the lowering of throughput also becomes larger.

The present invention aims to provide a wireless communication apparatus and a wireless communication method for performing different carrier measurement without lowering the throughput.

### Means for Solving the Problem

A wireless communication apparatus for carrying out communication by switching between a plurality of different carriers according to the present invention employs a configuration having: a packet continuation determining section that determines whether packet communication is continuing or paused; a suppressing section that suppresses a switch from a carrier currently used for communication to a different carrier or another carrier when the packet communication is determined to be continuing and that allows the switch to the different carrier when the packet communication is determined to be paused; and a carrier reception quality measuring section that measures reception quality of the different carrier the switch to which is allowed by the suppressing section.

According to this configuration, the switch from the carrier currently being used for communication to the different carrier is suppressed when the packet communication is being continuously performed, and the switch to the different carrier is allowed when the packet communication is being paused, so that the different carrier measurement is performed without lowering the throughput since the packet communication is not interrupted.

### Advantageous Effect of the Invention

According to the present invention, the different carrier measurement is suppressed during the packet communication, and the different carrier measurement is performed in the packet pausing interval in which the packet communication is not carried out, and thus the different carrier measurement is performed without lowering the throughput since the different carrier measurement is performed without interrupting the packet communication.

### Brief Description of Drawings

FIG.1 is a block diagram showing a configuration of a wireless communication terminal apparatus;
FIG.2 is a block diagram showing a configuration of a wireless communication terminal apparatus according to embodiment 1 of the present invention;
FIG.3(A) is a view showing a case of performing a different carrier measurement in the pausing interval of the packet;
FIG.3 (B) is a view showing a case of when the packet is continued over a long period of time;
FIG.4 is a flow chart showing the different carrier measurement control of the wireless communication terminal apparatus according to embodiment 1 of the present invention;
FIG.5 is a block diagram showing a configuration of a wireless communication terminal apparatus according to embodiment 2 of the present invention;
FIG.6 is a block diagram showing a configuration of a wireless communication terminal apparatus according to embodiment 3 of the present invention;
FIG.7 is a block diagram showing a configuration of a wireless communication terminal apparatus according to embodiment 4 of the present invention;
FIG.8 is a block diagram showing a configuration of a wireless communication terminal apparatus according to embodiment 5 of the present invention;
FIG.9 is a block diagram showing a configuration of a wireless communication terminal apparatus according to embodiment 6 of the present invention; and
FIG.10 is a block diagram showing a configuration of a wireless communication terminal apparatus according to embodiment 7 of the present invention.

### Best Mode for Carrying Out the Invention

The embodiments of the present invention will now be described with reference to the drawings.

### (Embodiment 1)

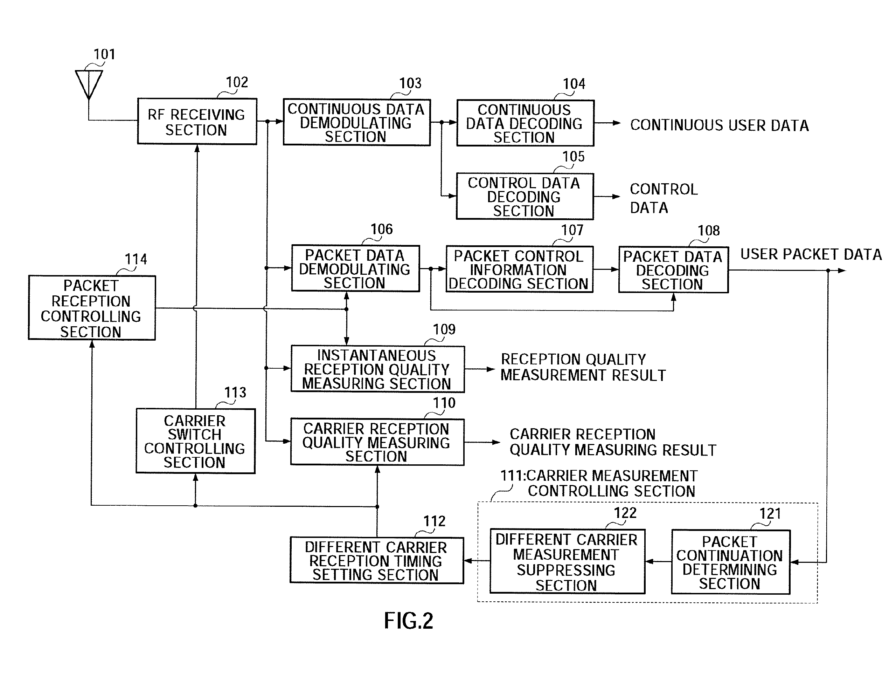

FIG.2 is a block diagram showing a configuration of a wireless communication terminal apparatus according to embodiment 1 of the present invention. In the figure, a packet communication system for commonly using the shared channel at time division among a plurality of wireless communication terminal apparatus (hereinafter referred to as "communication terminal") will be described by way of an example.

In FIG.2, the RF receiving section 102 receives the signal transmitted from the base station via the antenna 101, and performs down convert and the like on the signal received (received signal), and outputs the baseband signal to the continuous data demodulating section 103, the packet data demodulating section 106, the instantaneous reception quality measuring section 109, and the carrier reception quality measuring section 110. Further, the RF receiving section 102 switches the carrier to receive based on the control of the carrier switch controlling section 113.

The continuous data demodulating section 103 performs processes such as despreading and synchronous detection on the baseband signal output from the RF receiving section 102 and extracts the continuous data signal. The extracted continuous data signal generally includes continuous user data such as voice communication and control data for controlling the communication terminal. The extracted continuous data signal is output to the continuous data decoding section 104 and the control data decoding section 105.

The continuous data decoding section 104 extracts the user data portion from the continuous data signal output from the continuous data demodulating section 103, and performs error control such as error correcting decoding and the like, as necessary, and outputs the continuous user data.

The control data decoding section 105 extracts the control data portion from the continuous data signal output from the continuous demodulating section 103, and performs error control such as error correcting decoding and the like, as necessary, and outputs the control data. However, the continuous user data may not be present such as when only packet communication is carried out.

Thepacket data demodulating section 106 performs processes such as despreading and synchronous detection on the baseband signal output from the RF receiving section 102 and extracts the packet data signal. The extracted packet data signal includes information (hereinafter referred to as "destination information") indicating to which communication terminal the packet is addressed, transmission rate information and the like as control information for packet communication. The extracted packet data is output to the packet control information decoding section 107 and the packet data decoding section 108.

The packet control information decoding section 107 decodes the control information such as destination information and transmission rate information of the packet data signal output from the packet data demodulating section 106. Determination is made whether or not the packet data is addressed to its station from the decoded destination information, and the determination result is output to the packet data decoding section 108.

The packet data decoding section 108 decodes the packet data signal output from the packet data demodulating section 106 based on the determination result output from the packet control information decoding section 107. That is, if the determination result is addressed to its station, the packet data signal is decoded and the user packet data is output; and if the determination result is not addressed to its station, the packet data signal output from the packet data demodulating section 106 is discarded. The decoded user packet data is output to the carrier measurement controlling section 111.

The instantaneous reception quality measuring section 109 analyzes the baseband signal output from the RF receiving section 102 and measures the instantaneous reception quality. The instantaneous reception quality of the measured baseband signal is transmitted to the base station. At the base station, the communication terminal to which the shared channel is assigned is determined based on the instantaneous reception quality reported from each communication terminal so that efficient packet communication can be carried out.

The carrier reception quality measuring section 110 measures the reception quality of the carrier using the baseband signal output from the RF receiving section 102. The receiving power per code or S/N ratio is known for the measurement of the reception quality. With regards to the carrier to be measured, the carrier frequency currently being used for communication as well as the different carrier is measured, and the result of the carrier measurement is reported to the base station.

The carrier measurement controlling section 111 analyzes the user packet data decoded in the packet data decoding section 108 to determine whether or not it is continuously receiving the packet addressed to the subject terminal, and if continuously receiving the same, determination is made on how long it is being continued, and the signal for allowing different carrier measurement (different carrier measurement allowing signal) is generated based on the determination result. The generated different carrier measurement allowing signal is output to the different carrier reception timing setting section 112. The carrier measurement controlling section 111 will be hereinafter described in detail.

The different carrier reception timing setting section 112 recognizes that the different carrier measurement is being allowed when acquiring the different carrier measurement allowing signal output from the carrier measurement controlling section 111, and notifies the base station transmission pausing interval (hereinafter referred to as "gap timing") of the compressed mode to the carrier reception quality measuring section 110, the carrier switch controlling section 113, and the packet reception controlling section 114. If the different carrier measurement is not allowed, the notification of the gap timing is not carried out.

The carrier switch controlling section 113 outputs the carrier switch signal to the RF receiving section 102 at the gap timing notified from the different carrier reception timing setting section 112. The RF receiving section 102 switches the carrier frequency currently being used for communication to another carrier frequency (different carrier) and performs reception. After the gap timing is finished, the carrier switch controlling section 113 again outputs the carrier switch signal to the RF receiving section 102, and the RF receiving section 102 returns to the carrier frequency that was used for the communication and performs reception.

The packet reception controlling section 114 controls the packet data demodulating section 106 and the instantaneous reception quality measuring section 109 so as not to receive packet at gap timing. That is, since the packet signal addressed to its station is not transmitted from the base station, or even if transmitted, cannot be received in the different carrier, the reception of all packet data is suspended during the different carrier measurement in the packet data demodulating section 106. Therefore, the instantaneous reception quality measuring section 109 for measuring the reception quality of the packet data signal received at the carrier frequency currently being used for communication also suspends the measurement for an interval in which the normal measurement may not be performed during the different carrier measurement.

A configuration of the carrier measurement controlling section 111 will now be explained in detail. The packet continuation determining section 121 observes the user packet data output from the packet data decoding section 108 and determines whether or not it is continuously receiving the packet addressed to the subject terminal or is pausing. Generally, in the packet communication, the pausing interval exists after the packet continues intermittently over a certain period of time, and again the packet intermittently continues. That is, even during the packet continuing time, the packet data may not necessarily exist, and an interval, although a very short interval, in which the packet does not exist is also provided.

Therefore, whether or not the packet is being continued is determined by assuming the time longer than the short interval during packet continuation as time X and checking whether or nor the packet exists during time X. That is, if a state continues in which the packet is not received after time X has elapsed fromwhen reception of the packet is stopped, the interval from when the reception of the relevant packet has stopped is determined as the pausing interval of the packet. When determined as the pausing interval of the packet, the determination result is output to the different carrier measurement suppressing section 122.

The different carrier measurement suppressing section 122 serving as a suppressing means generates the different carrier measurement allowing signal to perform measurement of the different carrier when the determination result output from the packet continuation determining section 121 indicates pausing of packet, and outputs the generated different carrier measurement allowing signal to the different carrier reception timing setting section 112. If the determination result output from the packet continuation determining section 121 indicates the continuation of the packet, the different carrier measurement allowing signal is not generated so that the measurement of the different carrier is not performed.

When such control is performed, the different carrier measurement cannot be performed while the packet addressed to its station is being continuously received for a long period of time. The different carrier measurement suppressing section 122 then measures the time from the packet starting point, and generates the different carrier measurement allowing signal if not in the pausing interval during time Y (Y>X) to prevent the different carrier measurement from not being performed over a long period of time.

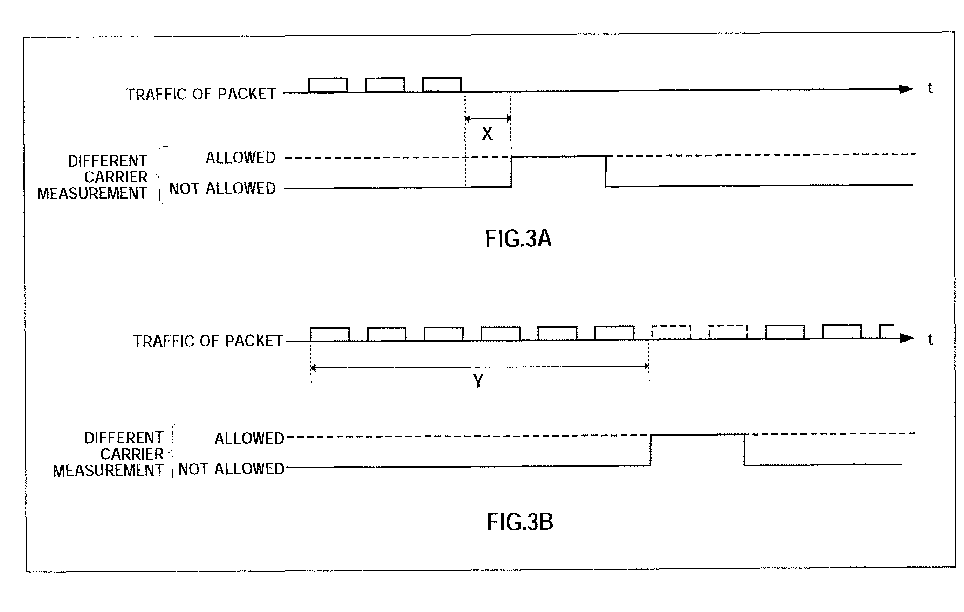

The operation of the different carrier measurement controlling section 111 having the above configuration will now be explained. FIG. 3A shows a case of performing the different carrier measurement in the pausing interval of the packet. The different carrier measurement is not allowed until time X elapses after the traffic of the packet is intermittently continued, and when time X has elapsed, it is determined as packet pausing interval and the different carrier measurement is allowed.

FIG.3B shows a case in which the packet is continued over a long period of time. If the packet is being continued even after time Y has elapsed from the start of packet, the reception of the packet is interrupted as described in Background Art, and the measurement of the different carrier is performed first. Thus, even if the packet is continued over a long period of time, the switch to a different carrier is smoothly performed, and the lowering of throughput is avoided when seen from the whole system.

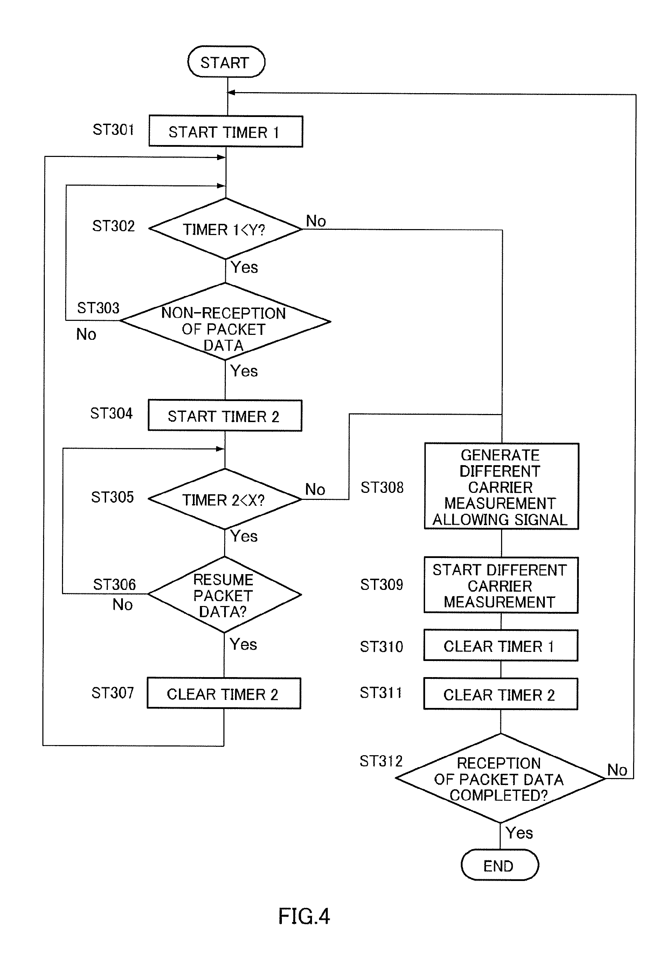

The different carrier measurement control of the communication terminal having the above configuration will now be explained. FIG.4 is a flow chart showing the different carrier measurement control of the wireless communication terminal apparatus according to embodiment 1 of the present invention. In the figure, the different carrier measurement suppressing section 122 starts a timer 1 with the start of packet transmission in step (hereinafter abbreviated as "ST") 301.

In step 302, determination is made whether or not the timer 1 is less than time Y in the different carrier suppressing section 122, and if less than time Y (YES), proceeds to ST 303, and if greater than or equal to time Y (NO), proceeds to ST 308. In ST 303, the packet continuation determining section 121 determines whether or not it is receiving the packet addressed to its station, and if determined as receiving the packet addressed to its station (NO), returns to ST 302, and if determined as not receiving the packet (YES), proceeds to ST 304.

In ST 304, the packet continuation determining section 121 starts a timer 2, and measures the time in which the packet is not received. In ST 305, determination is made whether or not the timer 2 is less than time X in the packet continuation determining section 121, and if less than time X (YES), proceeds to ST 306, and if greater than or equal to time X (NO), proceeds to ST 308.

In ST 306, the packet continuation determining section 121 determines whether or not reception of the packet is resumed, and if determined that the reception of the packet is resumed (YES), proceeds to ST 307, and when determined that the reception of the packet is not resumed (NO), returns to ST 305. In ST 307, the packet continuation determining section 121 clears the timer 2 and returns to ST 302.

In ST 308, the different measurement suppressing section 122 generates the different carrier measurement allowing signal when the timer 1 is determined as greater than or equal to time Y, that is, determined that it is continuously receiving the packet addressed to its station over a long period of time in ST 302. Similarly, the different carrier measurement suppressing section 122 generates the different carrier measurement allowing signal when the timer 2 is determined as greater than or equal to X, that is, determined that the reception of the packet addressed to its station is in the pausing interval in ST 305.

In ST 309, the RF receiving section 102 switches the carrier frequency to receive, and the carrier reception quality measuring section 110 performs the different carrier measurement. In ST 310, the different carrier measurement suppressing section 122 clears the timer 1, and in ST 311, the packet continuation determining section 121 clears the timer 2.

In ST 312, determination is made on whether or not the reception of the packet data is completed in the packet continuation determining section 121, and if completed, the different carrier measurement control is finished, and if not completed, returns to ST 301, and repeats the operations of ST 301 to ST 312 until the reception of the packet data is completed.

According to the present embodiment, the lowering of throughput is avoided by performing the different carrier measurement in the packet pausing interval in which the packet addressed to its station is not being received, and when the packet addressed to its station is being continuously received over a long period of time, the reception of the packet is interrupted and the different carrier measurement is prioritized to smoothly switch to a different carrier.

### (Embodiment 2)

In embodiment 1, a case of performing the different carrier measurement in the packet pausing interval in which the packet addressed to its station is not being received, and interrupting the reception of the packet and prioritizing the different carrier measurement when continuously receiving the packet addressed to its station over a long period of time is explained, but in embodiment 2 of the present invention, a case of prioritizing the packet communication over the different carrier measurement when reception of continuous user data such as voice communication is not present will be explained.

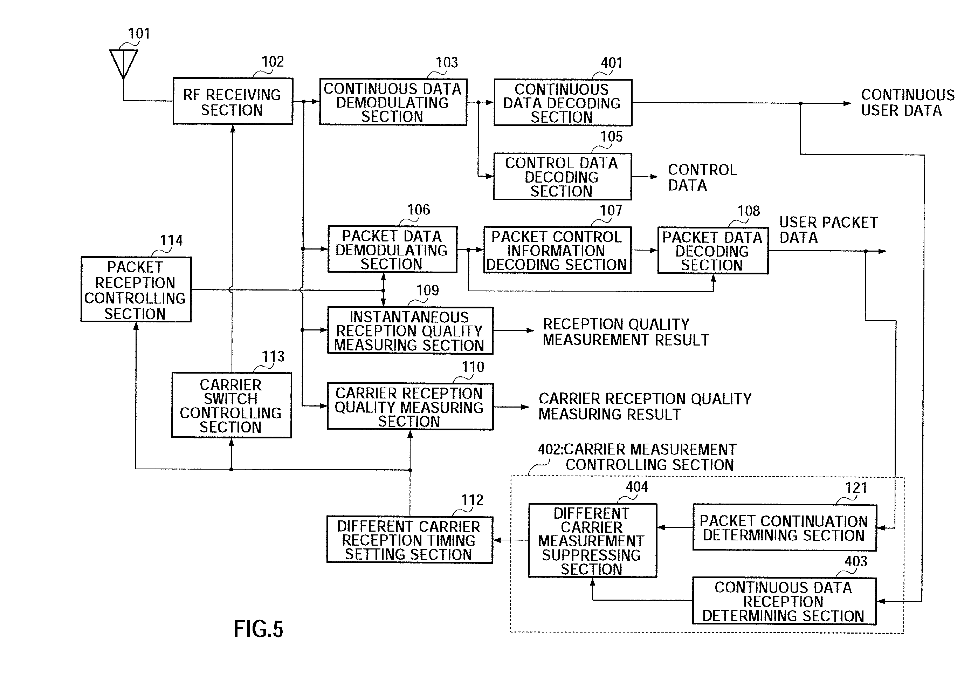

FIG.5 is a block diagram showing a configuration of a wireless communication terminal apparatus according to embodiment 2 of the present invention. In FIG.5, the reference characters same as FIG.2 are denoted for the components common with FIG.2, and thus the detailed explanation thereof is omitted. FIG. 5 differs from FIG. 2 in that the continuous data decoding section 104 is changed to a continuous data decoding section 401, and in that the carrier measurement controlling section 111 is changed to a carrier measurement controlling section 402 by adding a continuous data reception determining section 403 and changing the different carrier measurement suppressing section 122 to a different carrier measurement suppressing section 404.

The continuous data decoding section 401 extracts the user data portion from the continuous data signal, and performs error control such as error correcting decoding, as necessary, and outputs the continuous user data to the continuous data reception determining section 403 of the carrier measurement controlling section 402.

The continuous data reception determining section 403 monitors the continuous user data output from the continuous data decoding section 401, and determines whether or not the continuous user data exists, and outputs the determination result to the different carrier measurement suppressing section 404.

The different carrier measurement suppressing section 404 not only allows the different carrier measurement when the determination result output from the packet continuation determining section 121 indicates pausing of the packet, but also allows different carrier measurement even when the continuous user data exists. That is, a demand for stably maintaining the communication is higher for the continuous user data communication such as voice communication than the packet communication and the like. Therefore, the state of the different carrier must always be grasped to allow the switch of the carrier frequency at any time. Thus, when receiving the continuous user data, the different carrier measurement is prioritized over the packet communication as explained in the Background art. In other words, when the continuous user data is not being received, the packet communication is prioritized over the different carrier measurement. If the continuous user data is also being received during the packet communication, the different carrier measurement is allowed to perform smooth switch to a different carrier, and the continuous data communication is stably maintained.

In the present embodiment, determination is made whether or not the continuous data communication is being performed by actually monitoring the continuous user data, but determination may be made on whether or not continuous data communication is being performed based on the control information and the like.

According to the present embodiment, when the continuous data communication such as voice communication is also being performed during packet communication, the different carrier measurement is prioritized over the packet communication, the smooth switch to the different carrier is performed, and the continuous data communication is stably maintained.

### (Embodiment 3)

In embodiment 1, a case of performing the measurement control of the different carrier by monitoring the traffic of the packet addressed to its station is explained, but in embodiment 3 of the present invention, a case in which the base station transmits the packet pause information indicating the packet pausing interval to the communication terminal not targeted for transmission of packet, and the different carrier measurement control is performed based on the packet pause information is explained.

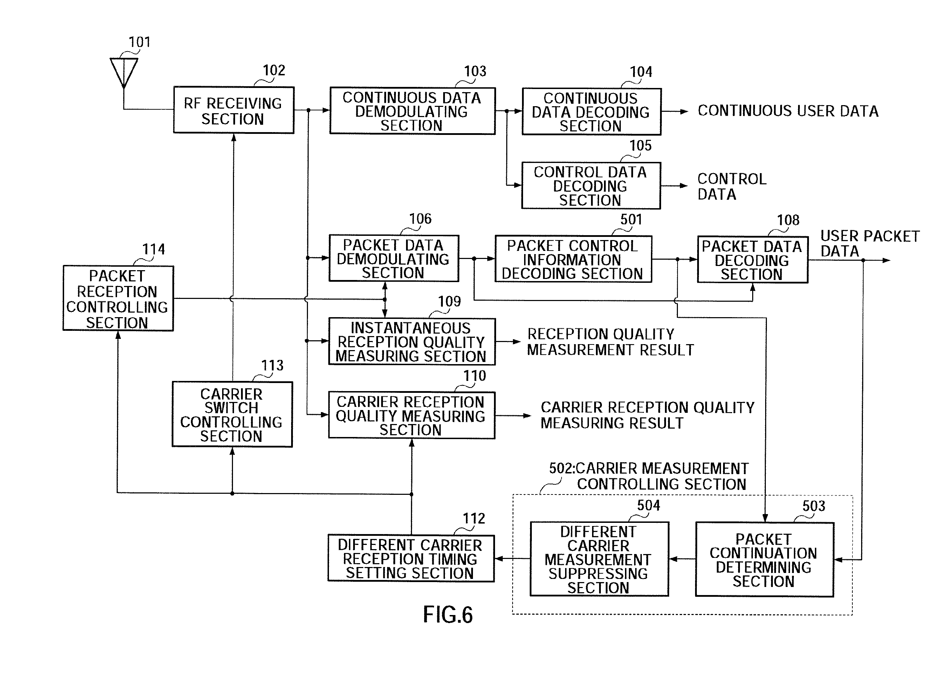

FIG.6 is a block diagram showing a configuration of a wireless communication terminal apparatus according to embodiment 3 of the present invention. In FIG.6, reference characters same as FIG.2 are denoted to the component common with FIG.2, and thus the detailed description thereof is omitted. FIG.6 differs from FIG. 2 in that the packet control information decoding section 107 is changed to a packet control information decoding section 501, and in that the carrier measurement controlling section 111 is changed to a carrier measurement controlling section 502 by changing the packet continuation determining section 121 to a packet continuation determining section 503, and changing the different carrier measurement suppressing section 122 to a different carrier measurement suppressing section 504.

The packet control information decoding section 501 decodes the packet pause information indicating the packet pausing interval not targeted for transmission of the packet in addition to the destination information, transmission rate information and the like or the control information of the packet data signal. The decoded packet pause information is output to the packet continuation determining section 503 of the carrier measurement controlling section 502.

The packet continuation determining section 503 determines whether the packet is being continued or being paused based on the packet pause information output from the packet control information decoding section 501 and outputs the determination result to the different carrier measurement suppressing section 504. That is, the packet addressed to its station is determined to be paused if the packet pause information is output from the packet control information decoding section 501, and the packet addressed to its destination is determined to be continuously received if the packet pause information is not output from the packet control information decoding section 501.

The different carrier measurement suppressing section 504 generates the different carrier allowing signal to perform measurement of the different carrier when the determination result output from the packet continuation determining section 503 indicates pause of packet, and outputs the generated different carrier measurement allowing signal to the different carrier reception timing setting section 112. When the determination result output from the packet continuation determining section 503 indicates the continuation of the packet, the different carrier measurement allowing signal is not generated so that the measurement of the different carrier is not performed. The different carrier measurement suppressing section 504 measures the time from the packet starting point and generates the different carrier measurement allowing signal if not in the pausing interval during time Y (Y>X).

In the present embodiment, the packet pause information is included in the packet control information, but the packet pause information may be included in the control information in the continuous data communication. In this case, the continuous data signal is decoded by the control data decoding section 105, and the packet pause information is output to the different carrier measurement suppressing section 504.

According to the present embodiment, the different carrier measurement control is performed using the packet pause information transmitted from the base station to reduce the load of monitoring the packet addressed to its station in the communication terminal in which miniaturization and low power consumption is desired, and the lowering of throughput is avoided.

### (Embodiment 4)

In embodiment 4 of the present invention, a case of prioritizing the packet communication over the different carrier measurement when the transmission rate is high will be explained.

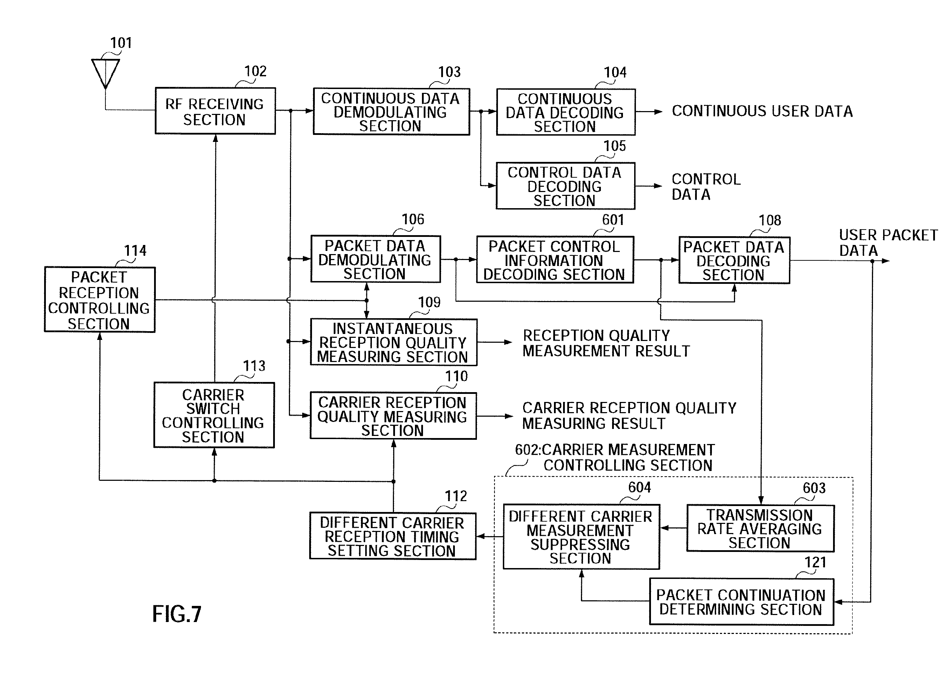

FIG.7 is a block diagram showing a configuration of a wireless communication terminal apparatus according to embodiment 4 of the present invention. In FIG.7, reference characters same as FIG.2 are denoted for components common with FIG.2, and thus the detailed description thereof is omitted. FIG. 7 differs from FIG. 2 in that the packet control information decoding section 107 is changed to a packet control information decoding section 601, and in that the carrier measurement controlling section 111 is changed to a carrier measurement controlling section 602 by adding a transmission rate averaging section 603 and changing the different carrier measurement suppressing section 122 to a different carrier measurement suppressing section 604.

The packet control information decoding section 601 decodes the control information such as destination information and transmission rate information of the packet data signal output from the packet data demodulating section 106. The decoded transmission rate information is output to the transmission rate averaging section 603 of the carrier measurement controlling section 602.

The transmission rate averaging section 603 averages the transmission rate of a constant amount based on the transmission rate information output from the packet control information decoding section 601.

The transmission rate of the packet data fluctuation according to the reception quality of the communication terminal in HSDPA and the like, but here, the average transmission rate in a certain interval is calculated. The averaging time is about 100ms, for example. The averaged transmission rate is output to the different carrier measurement suppressing section 604.

The different carrier measurement suppressing section 604 not only allows the different carrier measurement when the determination result indicating the pause of the packet is output from the packet continuation determining section 121, but also allows the different carrier measurement even if the transmission rate output from the transmission rate averaging section 603 is lower than a certain threshold value.

When transmitting the same amount of data in the packet communication, it takes a longer time in low transmission rate than in high transmission rate. Therefore, in low transmission rate, the pausing interval of the packet becomes short and the different carrier measurement cannot be completed within the packet pausing interval. If the transmission rate is low, a move to a carrier of higher transmission rate other than the carrier currently being used for communication is necessary to enhance the throughput. Thus, when the transmission rate is low, the packet communication is desirably prioritized over the different carrier measurement as explained in the Background art and to smoothly switch to a different carrier.

According to the present embodiment, the average value of the transmission rate of the packet is calculated, and when the transmission rate is low, the smooth switch to the different carrier becomes possible by prioritizing the different carrier measurement over the packet communication.

### (Embodiment 5)

In embodiment 5 of the present invention, a case of prioritizing the packet transmission over the different carrier measurement when the packet quality or the reception quality of the received packet data signal is good will be explained.

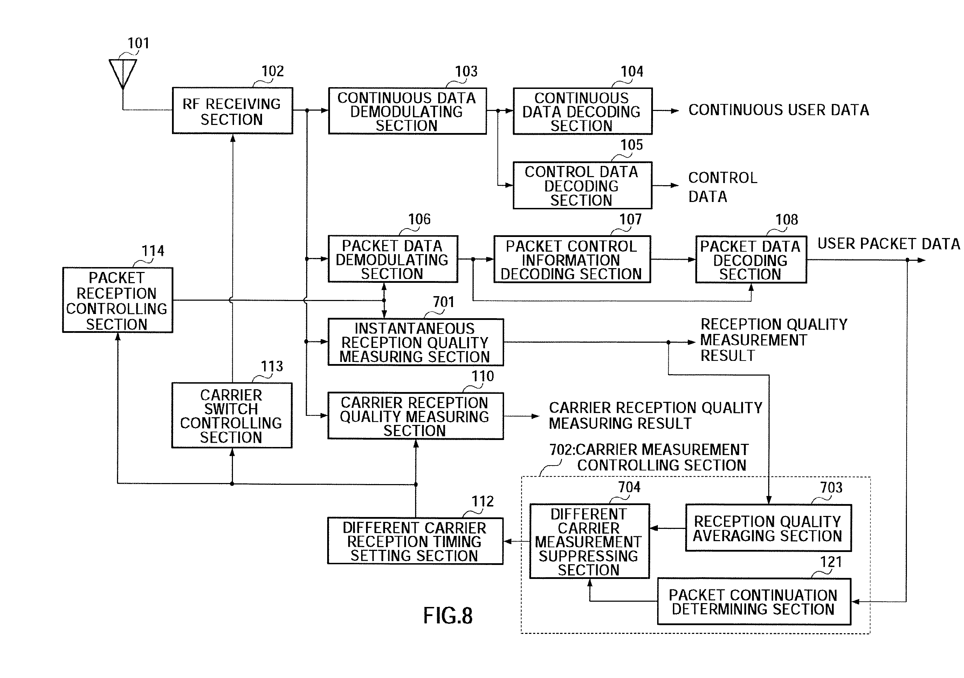

FIG.8 is a block diagram showing a configuration of a wireless communication terminal according to embodiment 5 of the present invention. In FIG.8, the reference characters same as FIG.2 are denoted for the components common with FIG.2, and thus the detailed explanation thereof is omitted. FIG.8differsfromFIG.2 in that the instantaneous reception quality measuring section 109 is changed to an instantaneous reception quality measuring section 701, and in that the carrier measurement controlling section 111 is changed to a carrier measurement controlling section 702 by adding a reception quality averaging section 703 and changing the different carrier measurement suppressing section 122 to a different carrier measurement suppressing section 704.

The instantaneous reception quality measuring section 701 analyzes the baseband signal output from the RF receiving section 102, and measures the instantaneous reception quality (packet quality) of the received packet data signal. The instantaneous reception quality (packet quality) of the measured baseband signal is transmitted to the base station, and output to the reception quality averaging section 703 of the carrier measurement controlling section 702.

The reception quality averaging section 703 averages a fixed amount of the reception quality measurement result output from the instantaneous reception quality measuring section 701. Generally, the reception quality of the propagation path instantaneously changes by the influence of fading and the like, but here, the average reception quality in a certain interval is calculated. The averaging time is about 100ms, for example. The information of the averaged reception quality is output to the different carrier measurement suppressing section 704.

The different carrier measurement suppressing section 704 not only allows the different carrier measurement when the determination result indicating the pause of the packet is output from the packet continuation determining section 121, but also allows the different carrier measurement even if the reception quality output from the reception quality averaging section 703 is lower than a certain threshold value.

If the reception quality in the packet communication is not good, the possibility of producing error is high, and the transmission rate becomes low, and thus the time required to transmit the same amount of data is long compared to when the reception quality is good. Therefore, the pausing interval of the packet becomes short when the reception quality is not good, and the measurement of the different carrier cannot be completed within the pausing interval. When the reception quality is not good, a move to a carrier having better reception quality other than the carrier currently being used for communication is necessary to enhance the throughput. Thus, when the reception quality is not good, the different carrier measurement is desirably prioritized over the packet communication as explained in Background Art and smooth switch to the different carrier is performed.

In the present embodiment, the measurement result of the instantaneous reception quality that measures the shared channel for the purpose of the shared channel assignment is used, but the reception quality may be measured separately from the baseband signal.

According to the present embodiment, the reception quality is averaged, and when the reception quality is not good, the smooth switch to the different carrier is achieved by prioritizing the different carrier measurement over the packet communication.

### (Embodiment 6)

In embodiment 6 of the present invention, a case of prioritizing the packet transmission over the different carrier measurement when the movement speed of the communication terminal is slow will be explained.

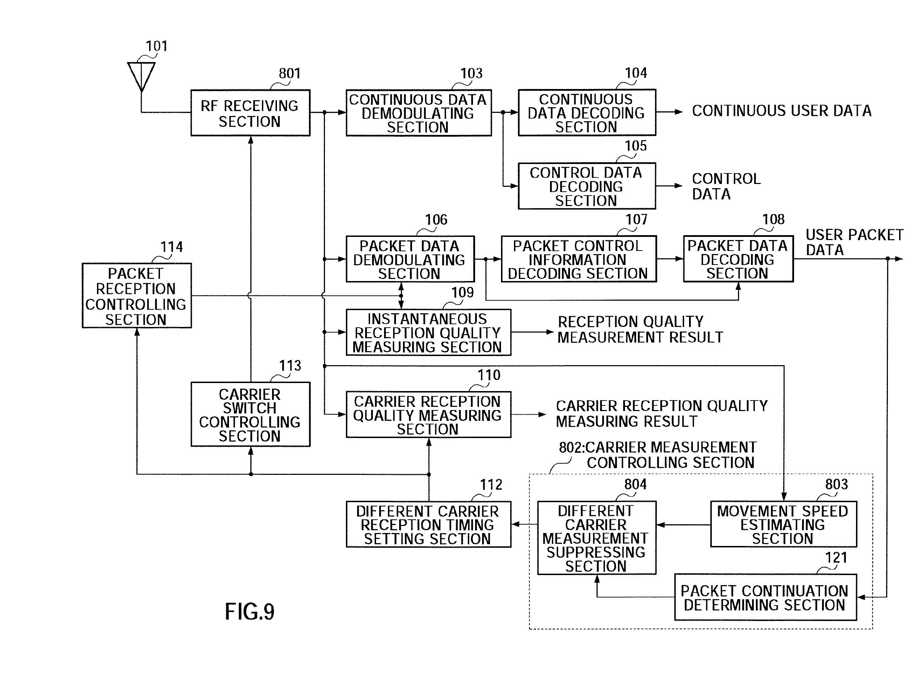

FIG.9 is a block diagram showing a configuration of a wireless communication terminal apparatus according to embodiment 6 of the present invention. In FIG.9, the reference characters same as FIG.2 are denoted for the components common with FIG.2, and thus the detailed description thereof is omitted. FIG. 9 differs from FIG.2 in that the RF receiving section 102 is changed to a RF receiving section 801, and in that the carrier measurement controlling section 111 is changed to a carrier measurement controlling section 802 by adding a movement speed estimating section 803, and changing the different carrier measurement suppressing section 122 to a different carrier measurement suppressing section 804.

The RF receiving section 801 receives the signal transmitted from the base station via the antenna 101, and performs down convert etc. of the signal received (received signal), and outputs the baseband signal to the continuous data demodulation section 103, the packet data demodulating section 106, the instantaneous reception quality measuring section 109, the carrier reception quality measuring section 110, and the movement speed estimating section 803 of the carrier measurement controlling section 802.

The movement speed estimating section 803 estimates the movement speed based on the baseband signal output from the RF receiving section 801, and outputs the estimated movement speed to the different carrier measurement suppressing section 804.

A method of estimating the Doppler frequency that increases in proportion to the movement speed from the magnitude of the phase rotating amount of the baseband signal and the fluctuation frequency of the receiving level, for example, is known as the method of estimating the movement speed.

The different carrier measurement suppressing section 804 not only allows the different carrier measurement when the determination result indicating the pause of the packet is output from the packet continuation determining section 121, but also allows the different carrier measurement even when the movement speed output from the movement speed estimating section 803 is faster than a certain threshold value.

When the movement speed of the communication terminal is fast, the switch to the communication area is also fast and thus if the suitable carrier frequency among each communication area differs, the carrier frequency must also be rapidly switched. Thus, in this case, as explained in the Background Art, the different carrier measurement is desirably prioritized over the packet communication and the smooth switch to the different carrier is performed.

According to the present embodiment, the movement speed of the communication terminal is estimated, and the different carrier measurement is prioritized over the packet communication when the movement speed is fast to allow smooth switch to the different carrier.

### (Embodiment 7)

In embodiments 1 to 6, a case of the communication terminal receiving the packet transmitted from the base station is explained, but in embodiment 7 of the present invention, a case of the communication terminal transmitting the packet, and a case of prioritizing the packet transmission from the communication terminal over the different carrier measurement will be explained.

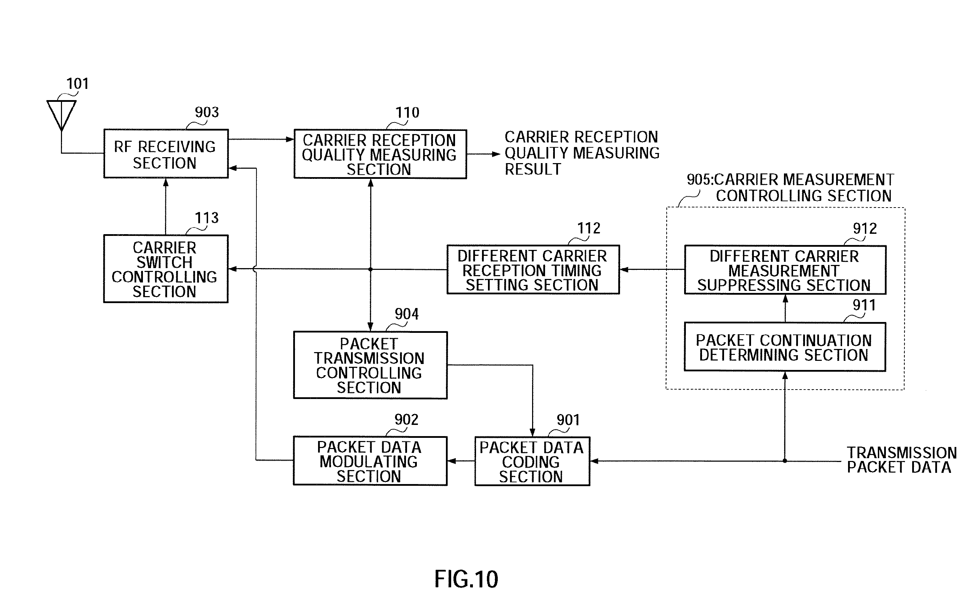

FIG. 10 is a block diagram showing a configuration of a wireless communication terminal according to embodiment 7 of the present invention. In FIG.10, the reference characters same as FIG.2 are denoted for the components common with FIG.2, and thus the detailed explanation thereof is omitted.

A packet data coding section 901 codes the transmitted packet data with error correcting code and the like, and outputs the transmitted packet data signal to a packet data modulating section 902.

The packet data modulating section 902 modulates the transmitted packet data signal output from the packet data coding section 901, and outputs the modulated signal to a RF transmitting/receiving section 903.

The RF transmitting/receiving section 903 performs transmission process such as up convert and the like on the modulated signal output from the packet data modulating section 902, and transmits the same to the base station via the antenna 101. The RF transmitting/receiving section 903 performs transmission/reception at a carrier based on the transmission carrier information output from the carrier switch controlling section 113. When performing transmission/reception of the RF, the frequencies of reception and transmission are cooperated for a certain fixed interval, so that the frequency control is common between transmission and reception thus leading to decrease in cost. In this case, when receiving at different carriers, the transmission at the carrier currently carrying out the communication does not occur for transmission as well. Thus, the compressed mode described above can also be applied for transmission.

A packet transmission controlling section 904 controls the packet data coding section 901 so as not to transmit the packet at the Gap timing output from the different carrier reception timing setting section 112. Thus, the packet data coding section 901 does not transmit the packet until the next transmission opportunity if controlled not to transmit the packet from the packet transmission controlling section 904.

A carrier measurement controlling circuit 905 determines whether or not the transmission of the packet is being continued, and generates a signal (different carrier measurement allowing signal) for allowing the different carrier measurement based on the determination result. The generated different carrier measurement allowing signal is output to the different carrier reception timing setting section 112.

The operation of the carrier measurement controlling circuit 905 will nowbe explained. In FIG. 10, the packet continuation determining section 911 determines whether or not the packet transmission is being continued. This includes determining whether or not it is being continued by actually observing the transmitted packet data, or determining by receiving the information that packet data is not present.

The different carrier measurement suppressing section 912 allows the measurement of the different carrier when determined that packet is being paused. That is, when transmitting the packet from the communication terminal, the packet transmission is prioritized while the transmitted packet is being continued, and the different carrier measurement is performed when the packet transmission is in the pausing interval to perform the different carrier measurement without lowering the throughput of the transmitted packet.

According to the present embodiment, the packet transmission from the communication terminal is prioritized over the different carrier measurement when the communication terminal transmits the packet, and the different carrier measurement is performed while the packet transmission is being paused to carry out the communication without lowering the throughput of the packet transmission.

In accordance with a first aspect of the present invention, a wireless communication apparatus for carrying out communication by switching between a plurality of different carriers is provided, and this wireless communication apparatus has: a packet continuation determining section that determines whether packet communication is continuing or paused; a suppressing section that suppresses a switch from a carrier currently used for communication to a different carrier or another carrier when the packet communication is determined to be continuing and that allows the switch to the different carrier when the packet communication is determined to be paused; and a carrier reception quality measuring section that measures reception quality of the different carrier the switch to which is allowed by the suppressing section.

According to this configuration, the switch to a different carrier from the carrier currently used for communication is suppressed when packet communication is continuously performed, and the switch to the different carrier is allowed when the packet communication is paused, and thus the different carrier measurement is performed without lowering throughput since packet communication is not interrupted.

In accordance with a second aspect of the present invention, in the wireless communication apparatus of the above aspect of the present invention, the packet continuation determining section determines that the packet communication is continuing if the packet communication is resumed within a first predetermined time after a pause of the packet communication and determines that the packet communication is paused if the packet communication is not carried out for the first predetermined time.

According to this configuration, the packet communication is determined to be continuing when packet communication is resumed within the first predetermined time from when the packet communication is paused and the packet communication is determined to be paused when the packet communication is not performed over the first predetermined time, so that the packet communication is determined to be continuing or paused even if the packet communication is intermittently carried out.

In accordance with a third aspect of the present invention, in the wireless communication apparatus of the above aspect of the present invention, the suppressing section allows the switch to the different carrier if the packet communication continues for over or equal to a second predetermined time that is longer than the first predetermined time.

According to this configuration, the different carrier measurement cannot be performed if the switch to the different carrier is continuously suppressed while the packet communication is continuing, but the switch to the different carrier is allowed to prevent the different carrier measurement from not being performed over a long period of time if the packet communication is continuously carried out over greater than or equal to the second predetermined time that is longer than the first predetermined time.

In accordance with a fourth aspect of the present invention, the wireless communication apparatus of the above aspect of the present invention further has a continuous data communication determining section that determines whether or not continuous data communication is carried out, and, in this wireless communication apparatus, when the continuous data communication is determined to be carried out, the suppressing section allows the switch to the different carrier even if the packet communication is continuing.

According to this configuration, when the continuous data communication is performed, the switch to the different carrier is allowed even if the packet communication is continuing to satisfy the stable maintenance of the communication required at high level in the continuous data communication.

In accordance with a fifth aspect of the present invention, in the wireless communication apparatus of the above aspect of the present invention, the packet continuation determining section determines whether the packet communication is continuing or paused based on packet pause information indicating to pause the packet communication transmitted from a communicating party.

According to this configuration, determination is made whether the packet communication is continuously performed or paused based on the packet pause information indicating to pause the packet communication transmitted from the communicating party to reduce the load of monitoring the packet addressed to its apparatus in the wireless communication terminal apparatus in which miniaturization and reduced power consumption are desired.

In accordance with a sixth aspect of the present invention, the wireless communication apparatus of the above aspect of the present invention further has a transmission rate acquiring section that acquires a transmission rate of the packet communication, and, in this wireless communication apparatus, the suppressing section allows the switch to the different carrier even if the packet communication continuing when the transmission rate is lower than a predetermined value.

According to this configuration, when the transmission rate is lower than the predetermined value, the pausing interval of the packet becomes short, and the different carrier measurement cannot be completed within the packet pausing interval, and thus the different carrier measurement is prevented from not being performed over a long period of time by allowing the switch to a different carrier even if the packet communication is being continued.

In accordance with a seventh aspect of the present invention, the wireless communication apparatus of the above aspect of the present invention further has a packet quality measuring section that measures the packet quality or the reception quality of the received packet, and, in this wireless communication apparatus, when the packet quality is poorer than a predetermined quality, the suppressing section allows the switch to the different carrier even if the packet communication is continuing.

According to this configuration, when the packet quality is poorer than the predetermined quality, the pausing interval of the packet becomes short, and the measurement of the different carrier cannot be completed in the pausing interval, and thus the different carrier measurement is prevented from not being performed over a long period of time by allowing the switch to a different carrier even if the packet communication is being continued.

In accordance with a eighth aspect of the present invention, the wireless communication apparatus of the above aspect of the present invention further has a movement speed estimating section that estimates a movement speed of the wireless communication apparatus, and, in this wireless communication apparatus, when the movement speed is greater than a predetermined value, the suppressing section allows the switch to the different carrier even if the packet communication is continuing.

According to this configuration, the switch of the communication area is fast when the movement speed is greater than a predetermined value, and thus if the suitable carrier frequency in each communication area differs, the carrier frequency must be rapidly switched over, and a smooth switch to the different carrier is performed by allowing the switch to the different carrier even if the packet communication is being continued.

In accordance with a ninth aspect of the present invention, a wireless communication terminal apparatus is provided having the wireless communication apparatus of the above aspect.

According to this configuration, the switch from the carrier currently being used for communication to the different carrier is suppressed when the packet communication is being continued, and the switch to the different carrier is allowed when the packet communication is being paused, so that the different carrier measurement is performed without lowering the throughput since the packet communication is not interrupted.

In accordance with a tenth aspect of the present invention, a wireless communication method for carrying out communication by switching between a plurality of different carriers is provided, and this method has the steps of: determining whether packet communication is continuing or paused; suppressing a switch from a carrier currently used for communication to a different carrier or another carrier when the packet communication is determined to be continuing and allowing the switch to the different carrier when the packet communication is determined to be paused; and measuring reception quality of the different carrier the switch to which is allowed.

According to this method, the switch from the carrier currently being used for communication to the different carrier is suppressed when the packet communication is being continuously carried out, the switch to the different carrier is allowed when the packet communication is being paused, so that the different carrier measurement is performed in the pause interval of the packet communication to avoid the lowering of the throughput since the packet communication is not interrupted.

The present application is based on Japanese Patent Application No.2004-170184, filed on June 8, 2004, the entire content of which is entirely incorporated herein by reference.

### Industrial Applicability

The wireless communication apparatus and the method of wireless communication according to the present invention perform a different carrier measurement without interrupting the packet communication, have an advantage of avoiding the lowering of the throughput and can be applied to the wireless communication terminal apparatus of CDMA method and the like.

## Claims

1. A wireless communication apparatus for carrying out communication by switching between a plurality of different carriers, the wireless communication apparatus comprising:
a packet continuation determining section that determines whether packet communication is continuing or paused;
a suppressing section that suppresses a switch from a carrier currently used for communication to a different carrier or another carrier when the packet communication is determined to be continuing and that allows the switch to the different carrier when the packet communication is determined to be paused; and
a carrier reception quality measuring section that measures reception quality of the different carrier the switch to which is allowed by the suppressing section.

2. The wireless communication apparatus according to claim 1, wherein the packet continuation determining section determines that the packet communication is continuing if the packet communication is resumed within a first predetermined time after a pause of said packet communication and determines that the packet communication is paused if the packet communication is not carried out for the first predetermined time.

3. The wireless communication apparatus according to claim 1, wherein the suppressing section allows the switch to the different carrier if the packet communication continues for over or equal to a second predetermined time that is longer than the first predetermined time.

4. The wireless communication apparatus according to claim 1, further comprising a continuous data communication determining section that determines whether or not continuous data communication is carried out,
wherein, when the continuous data communication is determined to be carried out, the suppressing section allows the switch to the different carrier even if the packet communication is continuing.

5. The wireless communication apparatus according to claim 1, wherein the packet continuation determining section determines whether the packet communication is continuing or paused based on packet pause information indicating to pause the packet communication transmitted from a communicating party.

6. The wireless communication apparatus according to claim 1, further comprising a transmission rate acquiring section that acquires a transmission rate of the packet communication,
wherein the suppressing section allows the switch to the different carrier even if the packet communication continuing when the transmission rate is lower than a predetermined value.

7. The wireless communication apparatus according to claim 1, further comprising a packet quality measuring section that measures the packet quality or the reception quality of the received packet,
wherein, when the packet quality is poorer than a predetermined quality, the suppressing section allows the switch to the different carrier even if the packet communication is continuing.

8. The wireless communication apparatus according to claim 1, further comprising a movement speed estimating section that estimates a movement speed of the wireless communication apparatus,
wherein, when the movement speed is greater than a predetermined value, the suppressing section allows the switch to the different carrier even if the packet communication is continuing.

9. A wireless communication terminal apparatus comprising the wireless communication apparatus of claim 1.

10. A wireless communication method for carrying out communication by switching between a plurality of different carriers, the method comprising the steps of:
determining whether packet communication is continuing or paused;
suppressing a switch from a carrier currently used for communication to a different carrier or another carrier when the packet communication is determined to be continuing and allowing the switch to the different carrier when the packet communication is determined to be paused; and
measuring reception quality of the different carrier the switch to which is allowed.

## Amended claims

### Amended claims under Art. 19.1 PCT

1. (Deleted)

2. (Amended) A wireless communication apparatus comprising:
a receiving section that receives a packet addressed to the wireless communication apparatus;
a packet continuation determining section that determines that packet communication is continuing when reception of the packet addressed to the wireless communication apparatus resumes within a predetermined time from when the reception of the packet addressed to the wireless communication apparatus stops, and that determines that the packet communication is paused when reception of the packet addressed to the wireless communication apparatus is not performed beyond the predetermined time;
a suppressing section that suppresses a switch from a carrier currently used for communication to a different carrier or another carrier when the packet communication is determined to be continuing and that allows the switch to the different carrier when the packet communication is determined to be paused; and
a carrier reception quality measuring section that measures reception quality of the carrier currently used for communication and the different carrier.

3. (Amended) The wireless communication apparatus according to claim 2, wherein the suppressing section allows the switch to the different carrier when the packet communication is continuously carried out over a time longer than the predetermined time.

4. The wireless communication apparatus according to claim 2, further comprising a continuous data communication determining section that determines whether or not continuous data communication is carried out,
wherein, when the continuous data communication is determined to be carried out, the suppressing section allows the switch to the different carrier even if the packet communication is continuing.

5. (Deleted)

6. The wireless communication apparatus according to claim 2, further comprising a transmission rate acquiring section that acquires a transmission rate of the packet communication,
wherein the suppressing section allows the switch to the different carrier even if the packet communication continuing when the transmission rate is lower than a predetermined value.

7. The wireless communication apparatus according to claim 2, further comprising a packet quality measuring section that measures the packet quality or the reception quality of the received packet,
wherein, when the packet quality is poorer than a predetermined quality, the suppressing section allows the switch to the different carrier even if the packet communication is continuing.

8. The wireless communication apparatus according to claim 2, further comprising a movement speed estimating section that estimates a movement speed of the wireless communication apparatus,
wherein, when the movement speed is greater than a predetermined value, the suppressing section allows the switch to the different carrier even if the packet communication is continuing.

9. A wireless communication terminal apparatus comprising the wireless communication apparatus of claim 2.

10. A wireless communication method comprising the steps of:
determining that packet communication is continuing when reception of the packet addressed to a wireless communication apparatus resumes within a predetermined time from when the reception of the packet addressed to the wireless communication apparatus stops and determining that the packet communication is paused when the reception of the packet addressed to the wireless communication apparatus is not performed beyond the predetermined time; and
suppressing the switch from the carrier currently used for communication to a different carrier or another carrier when the packet communication is determined to be continuing and allowing the switch to the different carrier when the packet communication is determined to be paused.
